# EUROPÄISCHE PATENTSCHRIFT

(11) **EP 2 825 779 B1**
(45) Veröffentlichungstag und Bekanntmachung des Hinweises auf die Patenterteilung: **09.09.2020**
(21) Anmeldenummer: 13702964.1
(22) Anmeldetag: 28.01.2013
(51) Int. Cl.: F16B 5/04, F16B 5/06, F16B 19/02

(54) **BAUTEILVERBINDUNG**
COMPONENT CONNECTION
ASSEMBLAGE DE PIÈCES

(30) Priorität: 13.03.2012 DE 102012203878
(43) Veröffentlichungstag der Anmeldung: 21.01.2015
(73) Patentinhaber: Bayerische Motoren Werke Aktiengesellschaft, 80809 München (DE)
(72) Erfinder: LANKENAU, Carsten, 81829 München (DE); VIETZE, Eva, 80805 München (DE); VAN NIEKERK, Johann, 80993 München (DE); ZECH, Sebastian, 80801 München (DE)
(86) Internationale Anmeldenummer: PCT/EP2013/051572
(87) Internationale Veröffentlichungsnummer: WO 2013/135414

(56) Entgegenhaltungen:
- WO-A1-2011/134563
- WO-A2-01/90586
- DE-A1- 10 252 597
- DE-U1- 20 206 683
- US-A1- 2007 137 004

## Beschreibung

Die vorliegende Erfindung betrifft eine Bauteilverbindung gemäß dem Oberbegriff des Patentanspruches 1.

Zum technischen Hintergrund der Erfindung zählen die DE 10 2010 028 322 A1, WO2011/134563 A1, DE 202 06 683 U1, WO01/90586 A2 sowie die US2007/137004 A1.

Die Druckschrift DE 102 52 597 A1 beschreibt einen Befestigungsclip zum Befestigen eines eine Fensterscheibe einfassenden Dichtungs- oder Führungsrahmens an der Karosserie eines Kraftfahrzeugs, der mit einem Fußabschnitt versehen ist, der an einem ersten Bauteil festlegbar ist. Der Befestigungsclip verfügt zudem über einen sich in einer Befestigungsrichtung an den Fußabschnitt anschließenden Halteabschnitt, der wenigstens zwei elastisch verformbare Schenkel aufweist, die entgegen der Wirkung einer Rückstellkraft durch eine Öffnung eines zweiten Bauteils durchsteckbar sind. Die Schenkel weisen Halteflächen auf, die formschlüssig mit dem zweiten Bauteil verbindbar sind.

In der Großserienfertigung von Fahrzeugkarosserien werden eine Vielzahl einzelner Karosserieteile sowie Anbauteile, wie z.B. Halterungen etc., weitgehend automatisiert zusammengebaut. Bei einem Fügevorgang werden zwei oder mehrere Karosserieteile zunächst relativ zueinander positioniert und anschließend miteinander verbunden, z.B. durch Schweißen, Clinchen oder durch andere Verfahren. Im Fahrzeugbau aber auch bei einer Vielzahl anderer Anwendungen spielt das Thema "Leichtbau" eine zunehmend größere Rolle.

Aufgabe der Erfindung ist es, eine Bauteilverbindung zu schaffen, die insbesondere für Leichtbauanwendungen geeignet ist.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist eine Bauteilverbindung mit einem ersten Bauteil, von dem mindestens ein erstes, männliches "Fixierelement" absteht. Bei dem ersten Bauteil handelt es sich um ein Karosseriebauteil einer herzustellenden Fahrzeugkarosserie.

Die Bauteilverbindung weist ferner ein zweites Bauteil auf, das mindestens ein "weibliches Fixierelement" aufweist, in welches das männliche Fixierelement gesteckt bzw. geklemmt ist. Das weibliche Fixierelement kann z.B. durch ein kreisrundes Loch, ein Langloch, ein schlüssellochartiges Durchgangsloch, ein Loch in der Form eines Mehrecks o.ä. gebildet sein. Es kann aus dem zweiten Bauteil ausgestanzt sein. Stanzränder können von dem zweiten Bauteil (z.B. senkrecht) abstehend ("Klemmkragen") umgebogen sein (so genanntes "Kragenloch").

Bei dem zweiten Bauteil kann es sich z.B. um ein Fahrzeugbauteil oder aber auch um ein Nichtfahrzeugbauteil handeln.

Der Kern der Erfindung besteht darin, dass es sich zumindest bei dem ersten Bauteil um ein aus einem faserverstärkten Kunststoffmaterial bestehendes Bauteil handelt.

Eine derartige Bauteilverbindung kommt somit z.B. für die Herstellung von Fahrzeugkarosserien in Betracht, die ganz oder teilweise aus faserverstärkten Kunststoffbauteilen bestehen. Insbesondere kann vorgesehen sein, dass die beiden Bauteile aus unterschiedlichen Materialien bestehen ("Mischbauverbindungen"). Beispielsweise kann es sich bei dem ersten Bauteil um ein faserverstärktes Kunststoffbauteil (insbesondere um ein mit Kohlefasern verstärktes Kunststoffbauteil) und bei dem zweiten Bauteil um ein Metallbauteil, wie z.B. ein Stahl- oder Aluminiumbauteil handeln. Das erste Bauteil kann insbesondere im sogenannten "Nasspressverfahren" hergestellt sein.

Nach einer Weiterbildung der Erfindung ist vorgesehen, dass die beiden Bauteile über eine oder mehrere derartige Bauteilverbindungen miteinander verbunden sind. Es kann vorgesehen sein, dass die mindestens eine oben beschriebene Bauteilverbindung zum Vorfixieren der beiden Bauteile dient bzw. gezielt dazu verwendet wird. Die Fixierelemente ermöglichen ein Vorfixieren der beiden Bauteile, was den Vorteil hat, dass diese unmittelbar nach dem Zusammenstecken der Fixierelemente als Baugruppe transportiert bzw. bewegt werden können, ohne dass sich ihre Relativposition verändert.

Anders ausgedrückt, werden die beiden Bauteile durch die oben beschriebene Bauteilverbindung in eine vordefinierte Relativposition zueinander gebracht und nach dem "Zusammenstecken" der Fixierelemente dauerhaft fest miteinander verbunden und zwar durch Verkleben.

Nach einer Weiterbildung der Erfindung ist vorgesehen, dass die beiden Bauteile über die beiden Fixierelemente aneinander geklemmt sind und somit zumindest mit einer gewissen "Vorfixierkraft" zusammengehalten werden. Wenn die Bauteile anschließend durch Verkleben dauerhaft fest miteinander verbunden werden, müssen die Bauteile nicht notwendigerweise zusätzlich über Spann- oder Klemmvorrichtungen zusammengespannt werden. Bei entsprechender Auslegung der Fixierelemente kann die von den Fixierelementen aufgebrachte Klemmkraft ausreichend sein, um die beiden Bauteile während der Aushärtphase des Klebers hinreichend fest zusammen zu halten. Eine Bauteilverbindung gemäß der Erfindung ermöglicht somit einen Verzicht auf gesonderte Spann- oder Klemmvorrichtungen. Hieraus ergeben sich zum einen unmittelbar Kostenvorteile.

Ein weiterer Vorteil ist darin zu sehen, dass die beiden Bauteile in ihrem Verbindungsbereich, d.h. dort, wo sie miteinander verklebt werden, frei zugänglich sind. Die freie Zugänglichkeit erleichtert den Einsatz von Heizeinrichtungen (z.B. Infrarotstrahlern), die unter Umständen für ein schnelleres Aushärten des Klebers benötigt werden.

Nach einer Weiterbildung der Erfindung ist vorgesehen, dass das männliche Fixierelement ganz oder zumindest teilweise aus einem Thermoplast-Material besteht. Thermoplast-Materialien sind kostengünstig, leicht verarbeitbar. Im Spritzgussverfahren können damit vielfältigste Formen erzeugt werden. Thermoplast-Materialien korrodieren nicht und ermöglichen eine "galvanische Trennung" gegenüber anderen Materialien.

Das männliche Fixierelement kann einstückig mit einem "Basiselement" verbunden sein. Das Basiselement kann aus demselben Material bestehen wie das männliche Fixierelement. Das Basiselement kann plattenförmig ausgebildet sein, z.B. als kreisrunde, rechteckige, quadratische, dreieckförmige Platte etc. Alternativ dazu kann das Basiselement auch eine gewölbte Form aufweisen.

Um eine möglichst gute und feste Verbindung mit dem ersten Bauteil zu erreichen, ist vorgesehen, dass das Basiselement in das erste Bauteil "eingebettet" ist. "Eingebettet" bedeutet, dass das Basiselement ganz oder zumindest teilweise von dem ersten Bauteil aufgenommen ist. Dabei ist das Basiselement mit seiner dem ersten Bauteil zugewandten Unterseite und mit seinem gesamten umlaufenden Rand in das erste Bauteil eingebettet.

Eine dem ersten Bauteil abgewandte Oberseite des Basiselements kann, muss aber nicht notwendigerweise in das erste Bauteil eingebettet sein. Vielmehr kann vorgesehen sein, dass die Oberseite des Basiselements, von der das männliche Fixierelement absteht, im Wesentlichen in einer Ebene mit einer Oberseite des ersten Bauteils ist oder glatt oder im Wesentlichen glatt in eine Oberseite des ersten Bauteils übergeht. Insbesondere kann die Oberseite des Basiselements auch gewölbt ausgebildet sein, sofern die sich daran anschließende Seite des ersten Bauteils eine entsprechende Wölbung aufweist.

Wie oben bereits erwähnt, wird das von dem ersten Bauteil abstehende männliche Fixierelement in das in dem zweiten Bauteil vorgesehene weibliche Fixierelement eingesteckt bzw. eingeklemmt. Um einen vorgegebenen Mindestabstand zwischen den beiden Bauteilen im Bereich der Fixierelemente zu erreichen, ist vorgesehen, dass an einer Oberseite des Basiselements mindestens eine als Abstandshalter für das zweite Bauteil fungierende Erhebung vorgesehen ist. Ein derartiger "Mindestabstand" ist insbesondere für das Verkleben der beiden Bauteile sinnvoll, um sicherzustellen, dass eine hinreichende Menge Kleber zwischen den beiden Bauteilen verbleibt, wenn diese über die Fixierelemente zusammengeklemmt werden. Ohne ein derartiges Fixierelement bestünde die Gefahr, dass bei einer zu hohen Klemmkraft zu viel Kleber aus dem zwischen den beiden Bauteilen befindlichen Spalt herausgedrückt wird, was sich ungünstig auf die Festigkeit der miteinander verklebten Bauteile auswirken würde.

Im Folgenden wird die Erfindung im Zusammenhang mit der Zeichnung näher erläutert. Es zeigen:
- Figur 1: Ein erstes Ausführungsbeispiel mit einem kugelförmigen männlichen Fixierelement;
- Figur 2: ein Ausführungsbeispiel mit einem stiftartigen männlichen Fixierelement, dessen Kopf plastisch verformt wurde; und
- Figur 3: ein Ausführungsbeispiel mit einem männlichen Fixierelement, das einen elastischen Kopf aufweist.

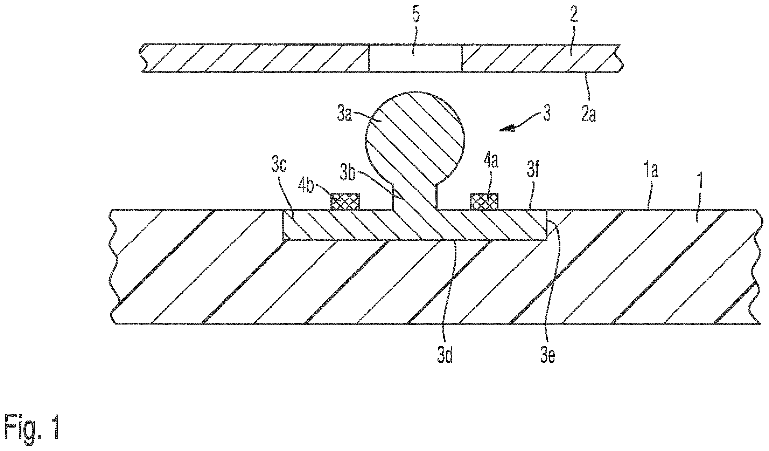

Figur 1 zeigt zwei Bauteile 1, 2 vor ihrem Verbinden. Bei dem ersten Bauteil 1 handelt es sich um ein aus einem faserverstärkten Kunststoffmaterial hergestelltes Bauteil. In dem Bauteil 1 können z.B. Kohlefasern, Glasfasern oder Fasern aus anderen Materialien verteilt angeordnet sein, welche das Bauteil 1 versteifen. Die Fasern können z.B. fein verteilt oder in einer textilen Struktur, z.B. in der Form eines Gewirks, Gestricks, Geleges, Gewebes o.ä. vorliegen. Derartige faserverstärkte Kunststoffbauteile werden in einem Spritzwerkzeug bzw. in einem Spritzpresswerkzeug hergestellt. Zunächst wird das faserartige Material, z.B. in der Form eines sogenannten "Preformlings", in das Spritzwerkzeug eingebracht. Anschließend wird ein flüssiges Kunststoffmaterial, z.B. ein Kunstharz, in das Spritzwerkzeug eingespritzt und ausgehärtet.

Das in Figur 1 gezeigte Bauteil 1 zeichnet sich dadurch aus, dass im Bereich einer Oberseite 1a ein männliches Fixierelement 3 in das faserverstärkte Kunststoffbauteil 1 "eingebettet" ist. Das männliche Fixierelement 3 weist einen Kugelkopf oder kugelförmigen bzw. kugelartigen Kopf 3a auf, der über einen stiftartigen Verbindungsabschnitt 3b mit einem plattenförmigen Basiselement 3c verbunden ist. Der Kopf 3a, der Verbindungsabschnitt 3b und das Basiselement 3c sind hier einstückig miteinander verbunden. Sie können aus ein- und demselben Material, z.B. einem Thermoplast-Material, hergestellt sein.

Wie aus Figur 1 ersichtlich ist, ist das männliche Fixierelement 3 mit einer Unterseite 3d und mit einem umlaufenden Rand 3e in das faserverstärkte Kunststoffbauteil 1 eingebettet. Eine dem faserverstärkten Kunststoffbauteil 1 abgewandte Oberseite 3f des Basiselements 3c geht hier im Wesentlichen "glatt" in die Oberseite 1a des faserverstärkten Kunststoffbauteils 1 über. Wie aus Figur 1 ersichtlich ist, stehen von der Oberseite 3f des Basiselements 3c zwei als Abstandshalter fungierende Erhebungen 4a, 4b ab. Anstatt zweier Erhebungen kann auch ein ringartig umlaufendes Abstandshalterelement vorgesehen sein.

Das in Figur 1 dargestellte zweite Bauteil 2 weist ein durch ein Durchgangsloch 5 gebildetes "weibliches Fixierelement" auf. Das Durchgangsloch 5 ist so dimensioniert, dass das männliche Fixierelement bzw. dessen Kopf 3a durch das Durchgangsloch 5 gesteckt werden kann, wobei sich beim Einstecken des Kopfes 3a in das Durchgangsloch 5 der Kopf 3a und/oder das Durchgangsloch 5 in gewissem Umfang elastisch verformen. Nach dem Durchstecken des Kopfes 3a durch das Durchgangsloch 5 liegt eine Unterseite 2a des zweiten Bauteils 2 auf Oberseiten der Abstandshalter 4a, 4b, wodurch ein definierter Abstand zwischen den beiden Bauteilen 1, 2 gewährleistet ist. Aufgrund der Elastizität des Kopfes 3a und des Durchgangslochs 5 werden die beiden Bauteile 1, 2 durch die beiden Fixierelemente 3, 5 zusammengeklemmt und zusätzlich formschlüssig aneinander gehalten.

Nach dem Zusammenklemmen der beiden Bauteile 1, 2 können diese dauerhaft miteinander verbunden werden, z.B. durch Verschweißen, Vernieten, Verschrauben etc. Erfindungsgemäß werden die beiden Bauteile 1, 2 miteinander verklebt, wobei mittels der Abstandshalter 4a, 4b sichergestellt wird, dass ein auf die Oberseite 1a aufgebrachter Kleber bzw. ein in den Zwischenraum zwischen den beiden Bauteilen 1, 2 eingebrachter Kleber dort verbleiben kann und nicht weitgehend durch die Fixierelemente 3, 5 herausgedrückt wird.

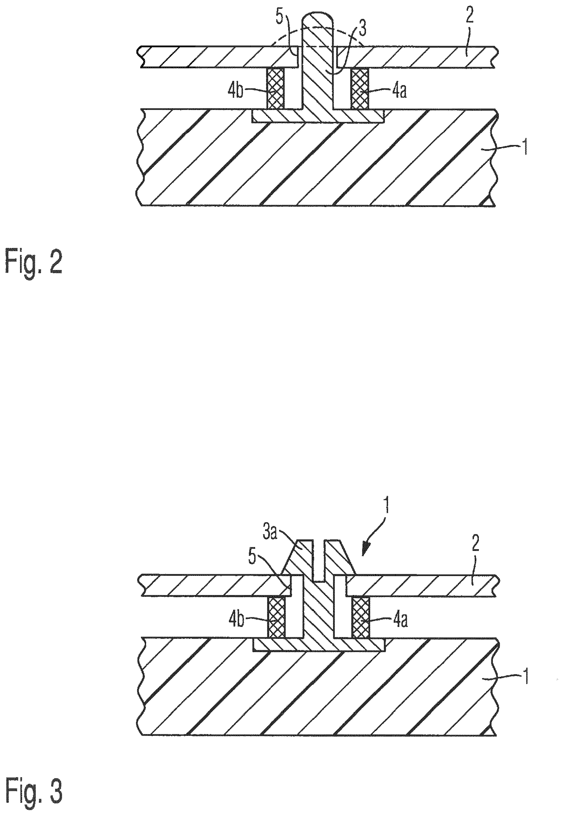

Figur 2 zeigt ein Ausführungsbeispiel, bei dem das männliche Fixierelement 3 die Form eines Stiftes bzw. Zapfen hat. Nach dem Hindurchstecken des männlichen Fixierelements 3 durch das in dem zweiten Bauteil 2 vorgesehene Durchgangsloch 5, kann das aus dem Durchgangsloch 5 herausstehende freie Ende des Zapfens 3 plastisch verformt werden, z.B. durch Erwärmen bzw. Erhitzen des freien Endes des Stiftes 3 und/oder durch eine mechanische Umformung desselben.

Figur 3 zeigt ein Ausführungsbeispiel, bei dem das männliche Fixierelement 3 einen elastischen Kopfabschnitt 3a aufweist, der hinsichtlich seiner Form mit der Form eines Kopfes einer Schlitzschraube vergleichbar ist. Der Kopf 3a ist so elastisch, dass er durch das etwas kleiner dimensionierte Durchgangsloch 5, welches in dem zweiten Bauteil 2 vorgesehen ist, hindurch gedrückt werden kann, wobei der Kopf 3a beim Durchdrücken elastisch verformt wird. Nach dem Hindurchdrücken des Kopfes 3a dehnt sich dieser wieder aus und übergreift, wie in Figur 3 dargestellt ist, das Durchgangsloch 5 formschlüssig, wodurch die beiden Bauteile 1, 2 zusammengehalten werden.

## Patentansprüche

1. Bauteilverbindung, mit
• einem ersten Bauteil (1), wobei von dem ersten Bauteil (1) mindestens ein erstes, männliches Fixierelement (3) absteht,
• einem zweiten Bauteil (2), das mindestens ein weibliches Fixierelement (5) aufweist, in welches das männliche Fixierelement (3) gesteckt ist, wobei
• das männliche Fixierelement (3) ein kopfartiges Element (3a) aufweist, welches mit einem Basiselement (3c) verbunden ist, wobei der kopfartige Abschnitt (3a) und das Basiselement (3c) aus demselben Material bestehen,
**dadurch gekennzeichnet, dass**
• das erste Bauteil (1) ein Karosseriebauteil einer herzustellenden Fahrzeugkarosserie ist und aus einem faserverstärkten Kunststoffmaterial besteht,
• das Basiselement (3c) mit seiner dem ersten Bauteil (1) zugewandten Unterseite und mit seinem gesamten umlaufenden Rand in das erste Bauteil (1) eingebettet ist,
• an einer Oberseite (3f) des Basiselements (3c) zumindest eine als Abstandshalter für das zweite Bauteil (2) fungierende Erhebung (4a, 4b) vorgesehen ist, und
• die beiden Bauteile (1, 2) miteinander verklebt sind.

2. Bauteilverbindung nach Anspruch 1,
**dadurch gekennzeichnet, dass** die beiden Bauteile (1, 2) über die beiden Fixierelemente (3, 5) aneinander geklemmt sind.

3. Bauteilverbindung nach Anspruch 1 oder 2,
**dadurch gekennzeichnet, dass** das männliches Fixierelement (3) aus einem Kunststoffmaterial besteht.

4. Bauteilverbindung nach einem der vorangehenden Ansprüche,
**dadurch gekennzeichnet, dass** das männliches Fixierelement (3) aus einem anderen Kunststoffmaterial als das erste Bauteil (1) besteht.

5. Bauteilverbindung nach einem der vorangehenden Ansprüche,
**dadurch gekennzeichnet, dass** das männliche Fixierelement (3) teilweise oder ganz aus einem Thermoplast-Material besteht.

6. Bauteilverbindung nach einem der Ansprüche 1 bis 5,
**dadurch gekennzeichnet, dass** das Basiselement (3c) die Form einer Platte hat.

7. Bauteilverbindung nach einem der Ansprüche 1 bis 6,
**dadurch gekennzeichnet, dass** eine Oberseite (3f) des Basiselements (3c), von welcher das kopfartige Element (3a) absteht, im Wesentlichen in einer Ebene mit einer Oberseite (1a) des ersten Bauteils (1) ist oder glatt in eine Oberseite (1a) des ersten Bauteils (1) übergeht.

8. Bauteilverbindung nach einem der Ansprüche 1 bis 7,
**dadurch gekennzeichnet, dass** das männliche Fixierelement eine kopfartigen Abschnitt 3a aufweist, der die Form einer Kugel, eines Teil einer Kugel oder eine kugelähnliche Form hat.

9. Bauteilverbindung nach einem der Ansprüche 1 bis 7,
**dadurch gekennzeichnet, dass** das männliche Fixierelement (3) die Form eines Stifts mit einem das weibliche Fixierelement übergreifenden Kopf (3a) aufweist.

10. Bauteilverbindung nach Anspruch 9,
**dadurch gekennzeichnet, dass** ein freies Endes des Stiftes plastisch zu dem Kopf deformiert wurde.

11. Bauteilverbindung nach einem der vorangehenden Ansprüche,
**dadurch gekennzeichnet, dass** ein freies Ende des Stiftes ein elastisches, kopfartiges Element aufweist, welches das weibliche Fixierelement (5) formschlüssig übergreift.

12. Bauteilverbindung nach einem der vorangehenden Ansprüche,
**dadurch gekennzeichnet, dass** das weibliche Fixierelement (5) durch ein kreisrundes Loch, durch ein Langloch, ein Kragenloch oder ein schlüssellochartiges Loch gebildet ist.

## Claims

1. Component connection, having
• a first component (1), wherein at least one first, male fixing element (3) projects from the first component (1),
• a second component (2) which comprises at least one female fixing element (5) into which the male fixing element (3) is plugged, wherein
• the male fixing element (3) comprises a head-like element (3a) which is connected to a base element (3c), wherein the head-like portion (3a) and the base element (3c) are composed of the same material, **characterized in that**
• the first component (1) is a body component of a vehicle body to be produced and is composed of a fibre-reinforced plastics material,
• the base element (3c) is embedded, with its underside which faces the first component (1) and with its entire peripheral edge, into the first component (1),
• at least one elevation (4a, 4b) which functions as a spacer for the second component (2) is provided on an upper side (3f) of the base element (3c), and
• the two components (1, 2) are adhesively bonded to one another.

2. Component connection according to Claim 1,
**characterized in that** the two components (1, 2) are clamped together by way of the two fixing elements (3, 5).

3. Component connection according to Claim 1 or 2,
**characterized in that** the male fixing element (3) is composed of a plastics material.

4. Component connection according to one of the preceding claims,
**characterized in that** the male fixing element (3) is composed of a different plastics material to the first component (1).

5. Component connection according to one of the preceding claims,
**characterized in that** the male fixing element (3) is partially or entirely composed of a thermoplastic material.

6. Component connection according to one of Claims 1 to 5,
**characterized in that** the base element (3c) has the form of a plate.

7. Component connection according to one of Claims 1 to 6,
**characterized in that** an upper side (3f) of the base element (3c), the head-like element (3a) projecting from said upper side, is substantially in a plane with an upper side (1a) of the first component (1) or transitions smoothly into an upper side (1a) of the first component (1).

8. Component connection according to one of Claims 1 to 7,
**characterized in that** the male fixing element comprises a head-like portion (3a) which has the form of a sphere, of part of a sphere or a sphere-like form.

9. Component connection according to one of Claims 1 to 7,
**characterized in that** the male fixing element (3) has the form of a pin with a head (3a) which engages over the female fixing element.

10. Component connection according to Claim 9,
**characterized in that** a free end of the pin has been deformed plastically to form the head.

11. Component connection according to one of the preceding claims,
**characterized in that** a free end of the pin comprises an elastic, head-like element which engages over the female fixing element (5) in a positively locking manner.

12. Component connection according to one of the preceding claims,
**characterized in that** the female fixing element (5) is formed by a circular hole, by an elongate hole, a collar hole or a keyhole-like hole.

## Revendications

1. Assemblage de pièces, comportant
• une première pièce (1), dans lequel au moins un premier élément de fixation mâle (3) fait saillie à partir de la première pièce (1),
• une deuxième pièce (2) qui comprend au moins un élément de fixation femelle (5) dans lequel l'élément de fixation mâle (3) est inséré, dans lequel
• l'élément de fixation mâle (3) comprend un élément (3a) de type tête, lequel est relié à un élément de base (3c), dans lequel la partie (3a) de type tête et l'élément de base (3c) sont constitués de la même matière, **caractérisé en ce que**
• la première pièce (1) est une pièce de carrosserie d'une carrosserie de véhicule à fabriquer et est constituée d'une matière synthétique renforcée par des fibres,
• l'élément de base (3c) est, par sa face inférieure tournée vers la première pièce (1) et par tout son bord périphérique, encastré dans la première pièce (1),
• sur la face supérieure (3f) de l'élément de base (3c) est prévu au moins un rehaussement (4a, 4b) agissant comme élément d'écartement pour la deuxième pièce (2), et
• les deux pièces (1, 2) sont collées l'une à l'autre.

2. Assemblage de pièces selon la revendication 1, **caractérisé en ce que** les deux pièces (1, 2) sont serrées l'une contre l'autre par le biais des deux éléments de fixation (3, 5).

3. Assemblage de pièces selon la revendication 1 ou 2, **caractérisé en ce que** l'élément de fixation mâle (3) est constitué d'une matière synthétique.

4. Assemblage de pièces selon l'une des revendications précédentes,
**caractérisé en ce que** l'élément de fixation mâle (3) est constitué d'une matière synthétique autre que celle de la première pièce (1).

5. Assemblage de pièces selon l'une des revendications précédentes,
**caractérisé en ce que** l'élément de fixation mâle (3) est constitué partiellement ou complètement d'une matière thermoplastique.

6. Assemblage de pièces selon l'une des revendications 1 à 5,
**caractérisé en ce que** l'élément de base (3c) présente la forme d'une plaque.

7. Assemblage de pièces selon l'une des revendications 1 à 6,
**caractérisé en ce qu'**une face supérieure (3f) de l'élément de base (3c), à partir de laquelle l'élément (3a) de type tête fait saillie, est sensiblement dans un plan comportant une face supérieure (1a) de la première pièce (1) ou se prolonge de manière unie dans une face supérieure (1a) de la première pièce (1).

8. Assemblage de pièces selon l'une des revendications 1 à 7,
**caractérisé en ce que** l'élément de fixation mâle comprend une partie (3a) de type tête, qui présente la forme d'une sphère, d'une partie de sphère ou présente une forme similaire à une sphère.

9. Assemblage de pièces selon l'une des revendications 1 à 7,
**caractérisé en ce que** l'élément de fixation mâle (3) présente la forme d'une goupille dotée d'une tête (3a) recouvrant l'élément de fixation femelle.

10. Assemblage des pièces selon la revendication 9,
**caractérisé en ce qu'**une extrémité libre de la goupille a été déformée plastiquement de manière à former la tête.

11. Assemblage de pièces selon l'une des revendications précédentes,
**caractérisé en ce qu'**une extrémité libre de la goupille comprend un élément élastique de type tête, lequel recouvre l'élément de fixation femelle (5).

12. Assemblage de pièces selon l'une des revendications précédentes,
**caractérisé en ce que** l'élément de fixation femelle (5) est formé par un trou circulaire, par un trou oblong, un trou à collerette ou un trou de type trou de serrure.
